(19) **Europäisches Patentamt**
**European Patent Office**
**Office européen des brevets**

(11) **EP 3 474 677 B1**

(12) **EUROPEAN PATENT SPECIFICATION**

(45) Date of publication and mention
of the grant of the patent:
**02.12.2020 Bulletin 2020/49**

(51) Int Cl.:
*A23K 10/00* (2016.01)     *A23K 10/20* (2016.01)
*A23K 10/22* (2016.01)     *A23K 10/30* (2016.01)

(21) Application number: **17732872.1**

(22) Date of filing: **21.06.2017**

(86) International application number:
**PCT/EP2017/065273**

(87) International publication number:
**WO 2017/220669 (28.12.2017 Gazette 2017/52)**

(54) **METHOD FOR PRODUCING A PALATABLE CAT KIBBLE**

VERFAHREN ZUR HERSTELLUNG VON WOHLSCHMECKENDEM KATZEN-KIBBLE

PROCÉDÉ POUR PRODUIRE UNE CROQUETTE POUR CHAT AU GOÛT AGRÉABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2016 EP 16305759**

(43) Date of publication of application:
**01.05.2019 Bulletin 2019/18**

(73) Proprietor: **Spécialités Pet Food**
**56250 Elven (FR)**

(72) Inventors:
• **GIROT, Pierre-Marc**
**44410 Asserac (FR)**
• **CREMONT, Matthieu**
**56400 Brech (FR)**
• **DE RATULD, Aurélie**
**56880 Ploeren (FR)**
• **BRAMOULLE, Loïc**
**56370 Sarzeau (FR)**
• **GUILLER, Isabelle**
**56250 Elven (FR)**

(74) Representative: **Regimbeau**
**20, rue de Chazelles**
**75847 Paris Cedex 17 (FR)**

(56) References cited:
**WO-A1-2007/041581     WO-A1-2009/095417**

• **DATABASE WPI Week 201608 Thomson
Scientific, London, GB; AN 2016-021272
XP002760931, & WO 2016/002301 A1
(UNI-CHARM KK) 7 January 2016 (2016-01-07)**
• **DATABASE WPI Week 201542 Thomson
Scientific, London, GB; AN 2015-33255W
XP002760932, & JP 5 733709 B1 (UNI-CHARM KK)
10 June 2015 (2015-06-10)**
• **DATABASE BIOSIS [Online] BIOSCIENCES
INFORMATION SERVICE, PHILADELPHIA, PA,
US; 1997, LIN S ET AL: "Effects of lipids and
processing conditions on degree of starch
gelatinization of extruded dry pet food",
XP002760933, Database accession no.
PREV199800004975**

**Description**

The present invention generally relates to the field of pet food, and more particularly to cat kibbles.

More precisely, the present invention concerns a method for producing kibbles that are highly palatable to cats.

**BACKGROUND OF THE INVENTION**

The worldwide pet food market extends continuously due to a pet population that becomes larger and larger over time, especially in developed countries.

Facing thus an increasing public demand for pet foods, the pet food industry looks for supplying foods which have a high degree of palatability.

There is a wide range of pet foods available on the market. These pet foods may be classified in different categories depending on their consumption purpose: (a) nutritionally-balanced diets, (b) complementary diets, and (c) snacks, treats, and edible toys.

Regarding nutritionally-balanced diets, the American Association of Feed Control Officials (AAFCO) standards require that nutritional elements necessary to maintain the health and life of a cat must be provided in the cat food within specified min-max limits. Nutritionally-balanced diets are thus designed to be fed in addition to water for an extended period of time as the sole source of nutrients; they are thus expected to meet all the energetic and nutrient requirements of the animal.

Complementary diets are not sufficient alone to ensure that all nutrient and energy needs are provided; they thus have to be combined with other diets.

Snacks, treats, and edible toys are appetizers or rewards that are offered from time to time by the pet owner to the animal.

Concerning more specifically nutritionally-balanced diets, they can in turn be classified in three main categories depending on their moisture content: dry, semi-moist (or semi-dry or soft dry or soft moist), and wet (or canned). Dry pet foods, such as dry kibbles, typically have a moisture content of less than 14% and generally have a dry, crunchy texture when chewed by pets. The density of these kibbles is generally comprised between about 350 and about 550 g/L. Semi-moist pet foods typically have a moisture content in the range of 14 to 50%. Wet pet foods generally have a moisture content above 50%, and often around 80%.

Among these nutritionally-balanced pet foods, there is an increasing demand for dry pet foods, and more particularly kibbles, that need to be more and more palatable. The production of kibbles is well known in the art and the skilled person has the choice between multiple formulations and processes for preparing such products.

The patent application WO2007/041581 A1 discloses the use of one or more LCPUFAs (Long Chain PolyUnsaturated Fatty Acids) in food compositions, in order to extend the shelf-life of these compositions while exhibiting acceptable palatability to animals, in particular dogs.

The patent application WO2016/002301 A1 discloses a method of producing granular pet food in which a palatability enhancer is unlikely to fall off from food granules and which has satisfactory palatability.

The patent JP 5 733709 B1 relates to a pet food having a moisture content of 10-30% mass, coated with animal and vegetable fats and oils.

Lin et al. "Effects of lipids and processing conditions on degree of starch gelatinization of extruded dry pet food" studies the effect of fat type, fat content and some processing conditions on the degree of starch gelatinization of dry pet food.

The patent application WO2009095417 A1 relates to a method for producing a palatability enhancer to be added in pet food.

There is thus still a continuous need for methods for producing kibbles highly palatable to cats, in particular methods for producing palatable cat kibbles having a standard density (i.e. from about 350 g/L to about 550 g/L), so as to stay in the ranges of commercial kibbles to which cats get used.

The present invention here provides a new method for producing a palatable kibble. Said invention is defined by the appended claims.

**SUMMARY OF THE INVENTION**

The present invention concerns a method for producing a cat kibble having a density from 350 to 550 g/L, comprising at least the steps of:

a) providing kibble ingredients, wherein one of said kibble ingredients is exogenous fat, said exogenous fat being an extrinsic or external fat which is provided as such as an individual cat kibble ingredient, said kibble ingredients comprising at least 2% of exogenous fat (% based on total weight of kibble ingredients),

b) at least partially precooking said kibble ingredients in a preconditioner, wherein said ingredients have a residence time in said preconditioner of at least about 2 minutes;

c) extruding the at least partially precooked kibble ingredients in an extruder with a die surface outflow rate (DSOR) inferior to 350 mm$^2$ / metric ton of throughput, wherein said DSOR refers to the total opened sections of the die holes at the outlet of the extruder divided by the working flow rate of the product at the outlet of the extruder die, defined by Equation (1): (1) DSOR = Total open area / Extruder rate

d) drying the kibble extrudate resulting from step c), thereby obtaining a kibble palatable to cats.

## DEFINITIONS

Unless specifically stated otherwise, ratios, amounts or percentages are expressed herein by weight of a product reference on a dry matter basis. The person skilled in the art will appreciate that the term "dry matter basis" means that an ingredient's concentration or percentage in a composition is measured after the free water has been removed, or determined on the basis of the weight of the composition once the weight of any free moisture in the composition has been subtracted.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 (from 0.1 to 1) represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc. Moreover, the terms "at least" and "less than" encompass the hereafter cited value. For example, "at least 5%" has to be understood as also encompassing "5%".

Moreover, in the present invention, measurable values, such as an amount, have to be understood as encompassing standard deviations which can easily be determined by the skilled person in the technical domain of reference. Preferably, these values are meant to encompass variations of ±2%, more preferably ±1% from the specified value, as such variations are appropriate to reproduce the disclosed methods and products. Of course, when using "about", it is meant that embodiments obtained when strictly respecting the indicated figures/numbers/values are also encompassed.

The term "about" as used herein when referring to a measurable value, such as an amount, is meant to encompass variations of ±5%, more preferably ±2%, even more preferably ±1% from the specified value, as such variations are appropriate to reproduce the disclosed methods and products. Accordingly, the term about can encompass variations larger than the standard deviations discussed above.

In the present disclosure, all of the possible ranges have not been explicitly mentioned so as to avoid having to set out at length and describe each and every value within the range. However, the ranges and ratio limits recited herein are combinable. For example, if ranges of 1-20 and 5-15 are recited for a technical feature, it is understood that ranges of 1-5, 1-15, 5-20 or 15-20 are also contemplated and encompassed thereby. This also applies on values illustrating lower and upper limits. A value illustrating a lower limit is thus combinable with a value illustrating an upper limit so as to form a ratio. For example, if a particular embodiment relates to the value X being superior to 2 and another particular embodiment relates to the value X being inferior to 5, it is understood that range of 2-5 is also contemplated and encompassed thereby.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any products, methods, or other means or materials similar or equivalent to those described herein can be used in the practice of the present invention, the preferred combinations, compositions, methods, or other means or materials are described herein.

The present invention is dedicated to cats. It will be appreciated that dogs and cats have nutritional needs which differ in key aspects, and their palatability regarding foods is most of the time very different. At a fundamental level, dogs are omnivores whereas cats are obligate carnivores. Bradshaw (The evolutionary basis for the feeding behaviour of domestic dogs (Canis familiaris) and Cats (Felis catus); J. Nutr. 136: 1927S-1931S, 2006) cited the evolutionary basis explaining these differences (p. 1927S, 2nd column: "Domestic dogs and cats, although both carnivores, therefore originated in different branches of the Carnivora, and have inherited rather different legacies of food preferences and food selection behavior"). However, the invention could be adapted for use with other classes of pets or companion animals (such as dogs, rabbits, guinea pigs, ferrets, hamsters, mice, gerbils, birds, horses, cows, goats, sheep, donkeys, pigs).

As used herein, the term "kibble" refers to typical dry pet foods formed as particulate chunks or pieces. The pieces can vary in sizes and shapes, depending on the process or the equipment. For instance, kibbles can have spherical, cylindrical, oval, or similar shapes. These kibbles are eaten by an animal, in particular a cat, and provide at least one nutrient to the animal. A "kibble" is herein a "nutritionally-balanced" food or diet, meaning that it contains all known required nutrients for the intended recipient or consumer of the food, except water, in appropriate amounts and proportions based, for example, on recommendations of recognized or competent authorities in the field of companion animal nutrition, such as the guidelines of the American Association of Feed Control Officials (AAFCO). Such foods are therefore capable of serving as a sole source of dietary intake to meet essential needs of pets, without the addition of supplemental nutritional sources. In the context of the present invention, a "kibble" refers to an uncoated kibble.

The term "cat kibble" means an uncoated kibble intended for consumption by a cat. A cat kibble is, as above explained, a "nutritionally-balanced" food. In particular, a cat kibble intended for kittens comprises at least 30% of proteins and 9% of fat, while a cat kibble intended for adult cats comprises at least 26% of proteins and 9% of fat (see AAFCO standards).

The term "coated cat kibble" means a cat kibble as defined above which is further coated.

The term "cat kibble ingredient" refers to any compound, composition or material used for preparing cat kibbles, and that is suitable for cat consumption. Non-limiting examples of cat kibble ingredients are animal material, vegetable material, exogenous fat, nutrients, carbohydrates, palatability enhancers, antioxidants, preservatives, surfactants, texturing agents, stabilizing agents, amino acids, vitamins, colouring agents, flavors, seasonings, etc.

The term "endogenous fat" refers to an intrinsic or inherent or internal fat originating or provided within a cat kibble ingredient.

The term "exogenous fat" refers to an extrinsic or external fat which is provided as such as an individual cat kibble ingredient. Advantageously, an exogenous fat has a purity of more than 80%, preferably more than 85%, more preferably more than 90%, more preferably more than 95%, more preferably more than 99%, more preferably more than 99.5%.

"Animal fats" are fats of animal origin and marine oils. Fats of animal origin (other than marine) are for example poultry fat, chicken fat, pork fat, beef tallow, dairy fat or lamb tallow, as well as by-products thereof. Marine oils are typically tuna oil, sardine oil, salmon oil, herring oil, mackerel oil, sand eel oil, trout oil, tilapia oil, catfish oil, anchovy oil, menhaden oil, as well as by-products thereof.

"Vegetable oils" are typically canola oil, soybean oil, corn oil, olive oil, sunflower oil, linseed oil, palm oil, rapeseed oil, sesame oil, coconut oil, peanut oil, safflower oil, as well as by-products thereof.

The term "animal material" encompasses any material typically derived from the body of an animal such as fresh meats, animal meals, whole dried eggs, animal proteins, animal digests, milk or derivatives, yeasts, and combinations thereof. It typically includes endogenous fat. It does not include exogenous fat. An animal material can be, without limitation, from poultry, pork, beef, sheep, lamb and/or fish.

The term "fresh meat" encompasses meats and meat by-products that may be obtained directly from a slaughterhouse, thus being fresh, raw, cooked or frozen, but not being dried. Meats and meat by-products include carcass, bone, skin, offal, muscle, intestine (provided their content is removed), lung, spleen, kidney, brain, livers, heart, viscera, blood, bone, stomachs, necks, heads, feet and/or gizzards. Fresh meat can be from poultry, pork, beef, sheep, lamb and/or fish.

As used herein, "fish" encompasses any species or kind of fish or crustaceans, preferably tuna, herring, mackerel, sand eel, trout, salmon, tilapia, cod, catfish, anchovy, menhaden, whitefish, shrimp, sardine.

The term "animal meal" (or animal flour) encompasses meals of meat and meals of meat by-product, typically obtained by at least drying (and for example cooking, pressing, drying, and/or milling) fresh meats. Example of animal meals are poultry (or poultry by-product) meals, pork (or pork by-product) meals, beef (or beef by-product) meals, sheep (or sheep by-product) meals, lamb (or lamb by-product) meals, fish (or fish by-product) meals, greaves.

"Whole dried eggs" (or dried whole eggs) are typically obtained by pasteurizing and drying liquid eggs.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast. Yeast by-products include, without limitation, yeast extracts, yeast hydrolysates, yeast autolysates, cream yeasts, etc.

The term "animal digest" means herein material which results from chemical and/or enzymatic hydrolysis of fresh meat, i.e. meat or meat by-product, obtained from one of above cited animals. In some embodiments, an animal digest as used herein is fully consistent with the definition promulgated by the Association Of American Feed Control Officials, Inc. (AAFCO). Animal digest is preferably derived from animal meat, including cold-blooded marine animals, excluding hair, horns, teeth, hooves, and feathers. The skilled artisan will appreciate that while such excluded parts are not preferred, trace amounts might be found unavoidably even under good manufacturing practices. Also not included are visceral contents or foreign or fecal matter, although trace contaminant amounts are sometimes present. An animal digest may be dried or not.

The term "vegetable material" encompasses any material, product or composition derived from vegetable or plant material. Vegetable material can be obtained from any vegetable source, such as a source selected from the group consisting of rice, corn (or maize), wheat, milo, alfalfa, barley, soy, chicory, pea, rye, sorghum, oat, tapioca, potato, bean, carrot, beetroot, broccoli, butternut, cabbage, cereal, chickpea, green bean, lentil, spinach, fruits such as apple, blueberries, cranberries, pomegranate, apple, pear, tomatoe, blackberries. A vegetable material can be originated from any part of vegetable, such as roots, aerial parts, fruits, leaves, seeds and/or woods. A vegetable material can be in any form such as in the form of whole grains, fractions of grains, flakes, grits, meals or flours, semolinas, vegetable proteins and/or gluten.

Examples of "carbohydrates" include monosaccharides, such as dextrose, fructose, sucrose, polysaccharides, such as starches, maltodextrins, fibers.

"Fiber" refers to components of a plant that are resistant to digestion by animal's digestive enzymes. Fiber can be soluble or insoluble. Sources of fiber for use herein include, but are not limited to, beet pulp, guar gum, chicory root, psyllium, cellulose, wheat oat, corn bran, flax seed.

Examples of nutrients include, without limitation, vitamins, minerals and electrolytes, such as vitamins A, C, E, B12, D3, folic acid, D-biotin, cyanocobalamin, niacinamide, thiamine, riboflavin, pyridoxine, menadione, beta-carotene, calcium pantothenate, choline, inositol, calcium, potassium, sodium, zinc, iron, manganese, copper, iodine.

Antioxidants, preservatives, surfactants, seasonings, texturing agents, stabilizing agents, colouring agents, flavors, seasonings, which may be used in the context of the present invention are well known by the skilled person.

As used herein, the term "palatability" refers to the overall willingness of a pet to eat a certain pet food. Whenever a pet shows a preference, for example, for one of two or more pet foods, the preferred pet food is more "palatable", and has "enhanced palatability". Such preference can arise from any of the pet's senses, but typically is related to, inter alia, taste, aroma, flavour, texture, smell and/or mouth feel.

Different methods exist to assess palatability. Examples of such methods involve exposure of pets to petfoods either simultaneously (for example, in side-by-side, free-choice comparisons, e.g., by measuring relative consumption of at least two different pet foods), or sequentially (e.g., using single bowl testing methodologies). Advantageously, at least two different methods may be used to consolidate the thus obtained results on palatability of a given pet food. Preferably, palatability is measured with consumption intake, typically by using tests such as "two-bowl test" (also called "versus test"), as explained in the Examples. Of course, the person skilled in the art is free to use any other appropriate test than those herein described to determine preference or acceptability. Such alternative tests are well known in the art.

The terms "palatability enhancer" and any other similar terms mean any compound, composition or material that is suitable for pet consumption material and that enhances the palatability of a pet food to an animal (in particular kibbles to cats).

A palatability enhancer may be a single material or a blend of materials, and it may be natural, processed or unprocessed, synthetic, or part of natural and part of synthetic materials. Non-limiting examples of palatability-enhancing ingredients of palatability enhancers are animal digests, vegetarian palatability-enhancing ingredients, Maillard ingredients, Maillard reaction products, proteins, peptides, amino acids, flavors, and optional ingredients such as carbohydrates, nutrients, preservatives, surfactants, texturing agents, etc. Ingredients may be comprised in a palatability-enhancer, or they can be contacted into the pet food preparation and react in situ for producing transformed materials that are also encompassed by the term "palatability-enhancer". Examples of ingredients that react together in the composition are, without limitation, peptides, amino acids, and carbohydrates, so as to obtain transformed materials such as Maillard reaction products.

The term "inorganic phosphate compound" as used herein means a chemical compound comprising at least one phosphorus atom. This chemical compound may be natural or synthetic, ionized or not. An inorganic phosphate compound can include phosphoric acid, monophosphates, pyrophosphates, polyphosphates, and combinations thereof.

As used herein, the term "Maillard reaction product" means herein any compound produced by a Maillard reaction. In particular, a Maillard reaction product is a compound that provides flavour and/or color and/or odor and/or taste and/or aftertaste.

By the term "preconditioning", it is meant the step of mixing homogeneously powders and liquids, preheating (or precooking) and prehumidifying the feed mixture, and pregelatinizing the starch in a preconditioner. An efficient mixing contributes to better moisture penetration and hydration of the mixture.

A "preconditioner" is a device having an elongated vat, which is a mixing chamber comprising at least one inlet orifice for the kibble ingredients (raw material) and at least one outlet orifice for the treated (i.e., preconditioned or precooked) material at the opposite ends of the vat, respectively. Preconditioners typically contain one or two mixing/conveying elements which consist of rotating shafts with radial attached paddles (or motor blades). It is known that these essential paddles are designed to agitate the ingredients and, thanks to their inclination, to perform an appropriate mixing of the materials contained therein and to gradually move the mixture from the inlet orifice toward the outlet orifice. The rotational speed impacts in particular the residence time of ingredients into the preconditioner. In particular, the preconditioner does not possess any screw as in an extruder. Moreover, a preconditioner is advantageously a hydrothermal preconditioner, meaning that heating is provided in the form of water and/or steam. Water is typically introduced from the top of the preconditioner and steam is typically introduced from the bottom of the preconditioner. There are different types of preconditioners known to the skilled person, such as atmospheric preconditioners, pressurized preconditioners.

By the term "extrusion", it is meant herein the process of forcing a food material to flow under one or more of a variety of conditions (mixing, heating, and shear) through a die which is designed to form the ingredients or foods. Extrusion combines several unit operations including mixing, cooking, kneading, shearing, shaping, and forming. The "extrusion" as used herein encompasses the steps of forcing the kibble extrudate through a die and slicing off the kibble extrudate in individual extrudates.

An "extruder" may be any conventional extrusion device known by the skilled person. As used herein, the term "extruder" refers to a cooking device that includes a tubular barrel having an inlet and an outlet and presenting an inner surface defining an elongated bore. An extruder typically also includes at least one elongated, helically flighted screw assembly within the bore whether the flights are continuous or interrupted, motive means for axially rotating the screw assembly, and an apertured extrusion die disposed across the barrel outlet. There are three main processing zones in the extruder barrel: the feeding zone, or inlet zone, where the free flowing material enters, then the kneading zone where the material is worked into amorphous dough, and finally the final cooking zone in which the product is transformed in a visco-amorphous mass. The extruder barrel mainly contributes to bring mechanical energy dissipated through the rotating screw. Nevertheless, some thermal energy may also be added by the direct injection of steam or from external heating sources as barrel sections heating using hot oil circulation or using electrical tracers or magnetic induction. The length to diameter ratio of the extruder barrel can be varied. The available screw elements vary depending upon the manufacturer and the application. More than simply transporting the precooked material from the inlet to the die, screw geometry may also contribute to mixing, kneading, heating, and pressure development. Extruders of the single screw or double screw type are typically used. A final die plate is set up at the end of the extruder barrel which has two main functions. First function consists in creating a restriction to product flow. This restriction contributes to achieve the required pressure and shear that help to final starch gelatinization. Second function is focused onto the final shaping of the extrudate as the products exit the extruder. It is to be understood that the term "extruder" is not meant to encompass "pellet mills" that are used to form pellets by compressing ingredients together.

"Residence time" or "retention time" as used herein refers to the time spent by the kibble ingredients being processed within the preconditioner or the extruder during precooking or extrusion, respectively. The residence time in the preconditioner can for example be determined by noting the time it takes a color marker introduced at the inlet of the preconditioner to show at the exit of the preconditioner.

By "specific mechanical energy (SME)", it is meant herein energy mechanically brought during extrusion by extruder screw configuration, die configuration, and extruder speed. SME is not arising from direct heat.

The terms "die surface outflow rate" (DSOR) refer to the total opened sections of the die holes at the outlet of the extruder divided by the working flow rate of the product at the outlet of the extruder die, defined by Equation (1):

$$(1) \quad DSOR = \text{Total open area / Extruder rate}$$

The expressed unit of "DSOR" is $mm^2$ (per hour) per metric ton of throughput. In other words, the unit is in $mm^2.h.T^{-1}$.

"Drying" refers to the reduction of the moisture level. It can be done by any suitable method known to the skilled person.

By "moisture level", it is meant herein the amount of water present in a given product mixture. This amount can be conveniently expressed in % by weight of the product mixture under consideration.

As used herein, the term "starch gelatinization degree" or "starch gelatinization rate" indicates the efficiency of the heat exchanger and how well the product was cooked. This rate can be conveniently expressed in % of gelatinized starch by weight of total starch of the product under consideration. Typically, the starch gelatinization degree is measured thanks to the method of the norm NF V 18-121.

The term "density" or "bulk density" means a measure of how much mass is contained in a given unit volume. It is commonly expressed in grams per liter (g/L). Density may be measured using a cubic box or cylindrical tube having a specific volume capacity, for example one litre.

"Coating", as used herein, refers to the topical deposition of a cat kibble coating onto the surface of a cat kibble, such as by spraying, dusting. A cat kibble coating is typically a fat and/or a palatability enhancer.

The term "maximal force" (or FMax) is defined as the force of the first compression enquired for kibble's breakage. It represents the resistance of extrudate to initial penetration. Usually a hard product will be associated with high maximal force. The expressed unit of "Force" is Newton (N).

The term "work" is a texture characteristic defined as an estimate of work. It corresponds to the work necessary to induce the first major failure of the kibble and expresses the ability of the material to absorb mechanical energy prior to failure. It is the area of the curve until y = Fmax (Maximal Force) and it is expressed as N.m or Joules.

The term "single package" means that the components of a kit are physically associated in or with one or more containers and considered a unit for manufacture, distribution, sale, or use. A single package may be containers of individual components physically associated such that they are considered a unit for manufacture, distribution, sale, or use.

As used herein, a "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

## DESCRIPTION OF SOME EMBODIMENTS OF THE INVENTION

The present inventors showed for the first time that a high palatability can be obtained for cats by specifically processing kibble ingredients comprising in particular exogenous fat.

Indeed, cat kibbles obtained according to the method of the invention are highly palatable compared to other cat kibbles.

### Method for preparing a cat kibble

The present invention thus concerns a method for producing a cat kibble having a density from 350 to 550 g/L, preferably from 350 to 550 g/L, comprising at least the steps of:

a) providing kibble ingredients, wherein one of said kibble ingredients is exogenous fat, said exogenous fat being an extrinsic or external fat which is provided as such as an individual cat kibble ingredient, said kibble ingredients comprising at least 2% of exogenous fat (% based on total weight of kibble ingredients),
b) at least partially precooking said kibble ingredients in a preconditioner, wherein said ingredients have a residence time in said preconditioner of at least about 2 minutes, preferably at least 2 minutes;
c) extruding the at least partially precooked kibble ingredients in an extruder with a die surface outflow rate (DSOR) inferior to 350 mm$^2$ / metric ton of throughput wherein said DSOR refers to the total opened sections of the die holes at the outlet of the extruder divided by the working flow rate of the product at the outlet of the extruder rate, defined by Equation (1):

$$(1)\ DSOR = Total\ opena\ area\ /\ Extruder\ rate$$

d) drying the kibble extrudate resulting from step c),

thereby obtaining a kibble palatable to cats.

The inventors of the present invention have discovered that kibbles prepared by precooking (during at least 2 minutes) and extruding kibble ingredients are highly palatable if said kibble ingredients comprise at least 2% of exogenous fat and if the die surface outflow rate (DSOR) is inferior to about 350 mm$^2$ / metric ton of throughput.

Even if it was known to the skilled person that fat is an important dietary component which also provides taste and textural variations to kibbles, it is surprising to observe that the addition of specific percentages of exogenous fat while processing kibbles ingredients, in particular by precisely controlling the DSOR during extrusion, enhances operatively and significantly palatability of kibbles to cats. Moreover, kibbles having a standard density are obtained thanks to the method of the invention.

As above mentioned, a "cat kibble" refers to an uncoated cat kibble. The essential characteristics of the present invention, such as regarding exogenous fat, are thus to be determined without taking into consideration the composition of an optional coating.

Preferably, said kibble ingredients comprise at least 2.5%, more preferably at least 3%, more preferably at least 3.5%, more preferably at least 4%, more preferably at least 4.5%, more preferably at least 5% of exogenous fat (% based on total weight of kibble ingredients). Indeed, the inventors surprisingly observed that, while DSOR is according to the invention, a kibble having more exogenous fat (such as 5% of exogenous fat) is more palatable than a kibble having less exogenous fat (such as 2.5%).

In an embodiment, said kibble ingredients comprise less than 15%, more preferably less than 10%, more preferably less than 8% of exogenous fat (% based on total weight of kibble ingredients). Indeed, it could be difficult to obtain a standard density when very high amounts of exogenous fat are used.

Encapsulated fat, such as microencapsulated fat in powder form, is preferably excluded.

In a preferred embodiment, the exogenous fat is an animal fat. Indeed, the inventors surprisingly observed that palatability was further enhanced when using animal fat instead of vegetable oil. Preferably, the animal fat is selected from the group consisting of poultry fat, chicken fat, pork fat, dairy fat, lamb tallow, beef tallow, marine oils, and combinations thereof. More preferably, the exogenous animal fat is selected from the group consisting of pork fat, chicken fat, poultry fat, dairy fat, lamb tallow, beef tallow, and combinations thereof. Still more preferably, the exogenous animal fat is selected from the group consisting of pork fat, poultry fat, beef tallow, dairy fat and combinations thereof, and still more preferably from pork fat, beef tallow, and combinations thereof. For example, the exogenous fat is pork fat. As another example, the exogenous fat is beef tallow.

In a particularly advantageous embodiment, the cat kibble has at least about 9%, more preferably at least 9%, more preferably at least about 9.5%, more preferably at least 9.5% of total fat by weight (% weight based on dry matter). This complies with the AAFCO standards regarding (dry) cat kibbles, which require at least 9% of fats, especially for adult cats. Fats can thus be provided by exogenous fat and optionally by other kibble ingredient(s). Preferably, the cat kibble has less than about 25% of total fat, more preferably less than 25%, more preferably less than 20%, more preferably less than 18%, more preferably less than 16% of total fat by weight (% weight based on dry matter). More preferably, the cat kibble has from 9% to 25% of total fat, more preferably from 9% to 20%, more preferably from 9% to 18%, more preferably from 9% to 16% of total fat by weight (% weight based on dry matter).

Preferably, the exogenous fat represents 15 to 70%, more preferably 20 to 65%, more preferably 20 to 60%, more preferably 25 to 55% of the total fat provided by the kibble ingredients.

Advantageously, the kibble ingredients comprise, in addition to exogenous fats, at least one ingredient selected from the group consisting of animal material, vegetable material, nutrients, carbohydrates, palatability enhancing compositions, antioxidants, preservatives, surfactants, texturing agents, stabilizing agents, amino acids, vitamins, colouring agents, flavors, seasonings, or a combination of two or more of these kibble ingredients. In a particular embodiment, the kibble ingredients comprise, in addition to exogenous fat, at least one animal material and one vegetable material.

In a particular embodiment, kibble ingredients comprise at least one animal material, preferably selected from the group consisting of fresh meats, animal meals, whole dried eggs, animal proteins, animal digests, milk or derivatives, yeasts, and combinations thereof. Preferably, the animal material is selected from poultry, pork, beef, sheep, lamb and/or fish.

Advantageously, the animal material comprises at least fresh meat and/or animal meal. Preferably, the animal meal is selected from the group consisting of poultry meal, poultry meal by-product (also named poultry by-product meal), greaves, fish meal, fish meal by-product, pork meal, pork meal by-product, beef meal, beef meal by-product, sheep meal, sheep meal by-product, lamb meal, lamb meal by-product and/or greaves.

Preferably, kibble ingredients comprise from 20 to 50%, preferably from 25% to 45%, more preferably from 30 to 45% of said animal material (% based on the total weight of kibble ingredients).

In a particular embodiment, kibble ingredients comprise at least one vegetable material. Preferably, the vegetable material is obtained from a source selected from the group consisting of rice, corn, wheat, milo, alfalfa, barley, soy, chicory, pea, rye, sorghum, oat, tapioca, potato, bean, carrot, beetroot, broccoli, butternut, cabbage, cereal, chickpea, green bean, lentil, spinach, fruits such as apple, blueberries, cranberries, pomegranate, apple, pear, tomatoes, blackberries, or combinations thereof. More preferably, the vegetable material is obtained from a source selected from the group consisting of rice, corn, soy, chicory, wheat, pea, and combinations thereof. Preferably, the vegetable material is in the form of whole grains and/or fractions of grains and/or meals and/or semolinas and/or gluten.

Preferably, the kibble ingredients comprise strictly less than 50%, more preferably less than 45%, even more preferably less than 40%, even more preferably less than 35% of starch (% weight based on dry matter). In particular, the kibble ingredients comprise more than 5% of starch, preferably more than 10%, even more preferably more than 15%, even more preferably more than 20% of starch (% weight based on dry matter).

Preferably, the kibble ingredients comprise more than 26%, more preferably more than 30% of protein (% weight based on dry matter). In particular, the kibble ingredients comprise less than 50%, more preferably less than 45% of protein (% weight based on dry matter).

In a particular embodiment, a step a1) of mixing one or more of the kibble ingredients is performed. Said step a1) is done before step b) of precooking.

Precooking step b) of the method according to the present invention is operated in a preconditioner, wherein the incoming material (i.e., the kibble ingredients) is appropriately heated and moisturized.

"Partially precooking" means that at least a part of kibble ingredients are precooked in the preconditioner.

In a first embodiment, a first part of kibble ingredients is precooked in the preconditioner (step b) before being extruded (step c) while a second part of kibble ingredients is directly extruded (with the first part of precooked kibble ingredients) without having been precooked.

Alternatively, all kibble ingredients are precooked in the preconditioner before being extruded (step c).

In particular, the exogenous fat can either be totally or partially precooked, or not precooked. In other words, a first portion of exogenous fat from 0 to 100% can be added in the preconditioner and a second portion of exogenous fat from 0 to 100% can be added in the extruder, with the proviso that at least one of said portions is different from 0%.

In a first embodiment, the exogenous fat is precooked in step b). Preferably, the exogenous fat is added to the other kibble ingredients in the beginning of the preconditioner. In other terms, exogenous fat is added separately from the other kibble ingredients.

In a second embodiment, the exogenous fat is directly extruded in step c) (without having been precooked).

In a third particular embodiment, a first part of the exogenous fat is precooked in step b) while the second part of the exogenous fat is directly extruded with the first part of exogenous fat (without having been precooked). Preferably in this third particular embodiment, at least 50%, preferably at least 60%, more preferably at least 70%, more preferably at least 80%, more preferably at least 90%, more preferably at least 95%, more preferably at least 97%, more preferably at least 99% of the exogenous fat is directly extruded (without having been precooked).

In one embodiment, an atmospheric preconditioner is used.

Alternatively, a pressurized preconditioner is used. Pressurized preconditioners are similar to atmospheric preconditioners except with the added ability to operate at pressures ranging from about 300 to about 1050 millibars. Preferably, pressures ranging from 300 to 1050 millibars, more preferably from about 400 to about 900 millibars, yet more preferably from 400 to 900 millibars, are used in the preconditioner. These pressures are typically achieved by incorporating a pressure lock feeding device at the inlet and discharge of the preconditioner. With this increase in pressure, temperatures of up to about 120°C, preferably up to 120°C, are obtained.

The residence time of kibble ingredients in said preconditioner is of at least about 2 minutes. The method of the invention thus provides kibbles palatable to cats even if kibble ingredients have a short residence time in the preconditioner, which is economically advantageous.

The residence time in the preconditioner may vary depending on different parameters such as the length of the preconditioner, the number of preconditioners consisting of two or more equipments installed in cascade. The skilled artisan will know how to proceed in practice to determine any appropriate preconditioner design and parameters requested for achieving the targeted residence time.

Preferably, the residence time in said preconditioner ranges from 2 minutes to 15 minutes, more preferably from 2 minutes to 13 minutes, even more preferably from 2 minutes to 10 minutes.

In an embodiment, said kibble ingredients used in step a) have a total moisture level from about 7 to about 40% by weight, preferably from 7 to 40% by weight.

Advantageously, steam and water are injected in said preconditioner in step b) at a steam:water ratio R1 from 30:70 to 100:0, more preferably from 50:50 to 100:0. These ratios enhance precooking of kibble ingredients having a high moisture level. Typically, the steam and the water taken into account are the ones injected into the preconditioner, without considering the moisture of kibble ingredients.

In a particular embodiment, the temperature of said at least precooked kibble ingredients resulting from step b) is from 60°C to 110°C, preferably from 70°C to 105°C, more preferably from 80°C to 100°C.

Preferably, said partially precooked kibble ingredients resulting from step b) have a starch gelatinization rate from about 25% to about 95% by weight, even more preferably from about 30% to 80% by weight.

The method according to the present invention comprises an extrusion step c). This step typically enables one to generate additional heat, pressure and shear conditions, which finalize the expected cooking and forming of the kibble extrudate. Step c) concerns all the kibble ingredients. In other terms, the kibble ingredients which have been precooked, and those which have not been precooked, if any, are extruded.

In step c), the DSOR is inferior to about 350 mm$^2$ / metric ton of throughput (in the extruder), preferably inferior to 350 mm$^2$ / metric ton of throughput, more preferably inferior to about 320 mm$^2$ / metric ton of throughput, more preferably inferior to 320 mm$^2$ / metric ton of throughput, more preferably inferior to about 300 mm$^2$ / metric ton of throughput, more preferably inferior to 300 mm$^2$ / metric ton of throughput, more preferably inferior to about 290 mm$^2$ / metric ton of throughput, more preferably inferior to 290 mm$^2$ / metric ton of throughput. The inventors have indeed surprisingly discovered that this essential value has to be complied with in order to obtain kibbles highly palatable to cats and having a standard density, when more than 2% of exogenous fat is added.

The extruder can be any extruder known by the skilled person and appropriate for the present invention. In a first embodiment, the extruder is a single screw extruder. In a second embodiment, the extruder is a twin screw extruder.

Improvements could be obtained by using a back pressure valve or similar devices. A back pressure valve is a device placed between the final extruder screw and the die. The amount of restriction can be controlled by opening up only as much as necessary to hold back the desired pressure at the inlet (upstream).

In an embodiment, in step c), said kibble extrudate has a residence time in the extruder ranging from about 5 to 50 seconds, more preferably from 5 to 50 seconds, even more preferably from about 5 to 40 seconds, yet even more preferably from 5 to 40 seconds.

Advantageously, the extruder has a L / D between 10 and 45, preferably between 20 and 45, wherein L is the length of each screw and D is the diameter, expressed in the same unit.

In an embodiment, said extrusion step c) is performed at a temperature from about 70 to about 150°C, preferably from 70 to 150°C, more preferably from about 75 to about 140°C, yet more preferably from 75 to 140°C, even more preferably from about 80 to about 130°C, yet even more preferably from 80 to 130°C.

The pressure at the die of the extruder preferably ranges from about 5 to about 90 bars, more preferably from 5 to 90 bars, more preferably from about 5 to about 80 bars, more preferably from 5 to 80 bars, more preferably from about 5 to about 70 bars, more preferably from 5 to 70 bars, yet even more preferably from about 5 to about 60 bars, yet even more preferably from 5 to 60 bars, yet even more preferably from about 15 to about 60 bars, yet even more preferably from 15 to 60 bars, yet even more preferably from 30 to 60 bars.

In an embodiment, the SME in the extruder is from 20 to 50 Wh/kg, preferably from 25 to 45 Wh/kg.

Preferably, said kibble extrudate resulting from step c) has a starch gelatinization rate from about 50% to about 100% by weight, more preferably from 50% to 100% by weight, even more preferably from about 70% to about 95% by weight, even more preferably from 70% to 95% by weight.

The kibble extrudate is then dried in step d) by any known means, for example in a hot air dryer. Advantageously, the kibble extrudate is dried until it contains less than 14% final moisture, and preferably from about 3% to about 14% moisture, more preferably from 3% to 14% moisture, more preferably from about 3% to about 10% moisture, more preferably from 3% to 10% moisture, more preferably from about 3% to about 8% moisture, and more preferably from 3% to 8% moisture.

In an embodiment, said cat kibble resulting from step d) has a starch gelatinization rate from about 70 to about 100% by weight, preferably from 70 to 95% by weight.

The method is performed under appropriate conditions in order to obtain a cat kibble having a density from about 350 g/L to about 550 g/L, preferably from 350 g/L to 550 g/L, more preferably from about 370 g/L to about 550 g/L, more preferably from 370 g/L to 550 g/L, more preferably from about 400 g/L to about 550 g/L, more preferably from 400 g/L to 550 g/L, more preferably from about 400 g/L to about 500 g/L, more preferably from 400 g/L to 500 g/L.

Kibble extrudate (not part of the invention)

Also a kibble extrudate as an intermediate product obtainable by step c) of the method as described herein, is disclosed.

It is disclosed that this extrudate has a moisture level from about 15 to about 35% by weight, preferably from 15 to 35% by weight, more preferably from about 16 to about 32% by weight, yet more preferably from 16 to 32% by weight, even more preferably from about 17 to about 30% by weight, yet even more preferably from 17 to 30% by weight.

It is disclosed that this extrudate has a starch gelatinization rate from about 50% to about 100% by weight, more preferably from 50% to 100% by weight, even more preferably from about 70% to about 95% by weight, and even more preferably from 70% to 95% by weight.

It is disclosed that this extrudate has a density from about 350 g/L to about 550 g/L, preferably from 350 g/L to 550 g/L, more preferably from about 370 g/L to about 550 g/L, more preferably from 370 g/L to 550 g/L, more preferably from about 400 g/L to about 550 g/L, more preferably from 400 g/L to 550 g/L, more preferably from about 400 g/L to about 500 g/L, more preferably from 400 g/L to 500 g/L.

Cat kibble (not part of the invention)

Also a cat kibble obtainable by the method of preparation as above described, is disclosed.

This cat kibble has a density from about 350 g/L to about 550 g/L, preferably from 350 g/L to 550 g/L, more preferably from about 370 g/L to about 550 g/L, more preferably from 370 g/L to 550 g/L, more preferably from about 400 g/L to about 550 g/L, more preferably from 400 g/L to 550 g/L, more preferably from about 400 g/L to about 500 g/L, more preferably from 400 g/L to 500 g/L.

Advantageously, this kibble has a moisture level from about 3 to about 14% by weight, preferably from 3 to 14% by weight, more preferably from about 3 to about 10% by weight, yet more preferably from 3 to 10% by weight, even more preferably from about 3 to about 8% by weight, yet even more preferably from 3 to 8% by weight.

Preferably, said cat kibble has at least about 9%, more preferably at least 9%, more preferably at least about 9.5%, more preferably at least 9.5% of total fat by weight (% weight based on the dry matter). Preferably, the cat kibble has less than about 25% of total fat, more preferably less than 25%, more preferably less than 20%, more preferably less than 18%, more preferably less than 16% of total fat by weight (% weight based on the dry matter). More preferably, the cat kibble has from 9% to 25% of total fat, more preferably from 9% to 20%, more preferably from 9% to 18%, more preferably from 9% to 16% of total fat by weight (% weight based on the dry matter).

It is disclosed that said cat kibble has a starch gelatinization rate from about 70% to about 100% by weight, preferably from 70% to 100%, and preferably from 70% to 95% by weight.

Advantageously, the work of the cat kibble is from about 5 to about 20 N.mm, preferably from about 8 to about 18 N.mm.

It is disclosed that said cat kibble has a spherical shape. The diameter is preferably from about 6 to 12 mm.

Coated cat kibble (not part of the invention)

Inventors have found that the cat kibble obtained is intrinsically highly palatable, said high palatability being optionally further enhanced by adding one or more palatability enhancers thereon by coating. In others terms, cat kibbles obtained according to the present invention are more palatable than other cat kibbles when compared using the same palatability enhancer coated onto these cat kibbles.

A coated cat kibble thus consists of a cat kibble obtainable by the method of preparation as above described, further coated with a cat kibble coating.

A method for preparing a coated cat kibble is disclosed, said method comprising at least the steps of:

- preparing a cat kibble as above described, and
- coating said cat kibble with a cat kibble coating, thereby obtaining a coated cat kibble.

Preferably, the cat kibble coating is a fat and/or a palatability enhancer.

Palatability enhancers are either in a liquid form or in a powder form. A liquid palatability enhancer is typically sprayed on, while a dry palatability enhancer is typically dusted on.

Advantageously, said palatability enhancer comprises at least one inorganic phosphate compound, preferably phosphoric acid, monophosphates, pyrophosphates, polyphosphates, and combinations thereof. Said inorganic phosphate compound is preferably selected from the group consisting of phosphoric acid, monophosphates, pyrophosphates, polyphosphates, and combinations thereof. A preferred inorganic phosphate compound according to the present invention is a pyrophosphate compound selected from the group consisting of disodium pyrophosphate, trisodium pyrophosphate, tetrasodium pyrophosphate, dipotassium pyrophosphate, tripotassium pyrophosphate, tetrapotassium pyrophosphate, tetraferric pyrophosphate, and combinations thereof. A more particularly preferred pyrophosphate compound is trisodium pyrophosphate. A preferred polyphosphate compound for use in the present invention is sodium tripolyphosphate.

Said inorganic phosphate compound is preferably present in the palatability enhancer in an amount of about 0.01 to 75%, yet preferably about 0.05 to 70%, more preferably about 0.1 to 65%, yet more preferably about 0.25 to 60% by weight of the composition.

Advantageously, this palatability enhancer comprises at least one animal digest as defined above.

Preferred animal digests are poultry product or by-product digests, pork product or by-product digests, and fish by-product digests.

Said animal digest is preferably present in said palatability enhancer in an amount of about 0.01 to 99%, more preferably about 0.05 to 95%, yet more preferably about 0.1 to 90%, even more preferably about 0.2 to 85%, and yet even more preferably about 0.5 to 80% by weight of the composition.

Advantageously, the palatability enhancer comprises Maillard reaction products obtained upon thermally reacting in situ carbohydrates (reducing sugars) and peptides and/or amino acids.

The content of these ingredients in said palatability enhancer is preferably of about 0.01 to 99%, yet preferably about 0.05 to 95%, more preferably about 0.1 to 90%, yet more preferably about 0.2 to 85%, and even more preferably about 0.5 to 80%, by weight of the composition.

It is disclosed that the cat kibble coating is a palatability enhancer. Preferably, this palatability enhancer is liquid.

It is disclosed that the cat kibble coating is a fat. For example, the fat is pork fat, poultry fat, beef fat, canola oil, soya oil, or a combination of two or more of these fats.

It is disclosed that the cat kibble coating is a fat and a palatability enhancer. Preferably, this palatability enhancer is in a powder form. Said palatability enhancer and fat can be applied concomitantly, or sequentially, or at time intervals.

For example, (uncoated) cat kibbles can be placed in a container such a tub or a coating drum for mixing. A fat, such as pork fat or poultry fat, is heated and then sprayed onto the pet food in a manner to obtain a coating of the kibbles. The coating does not need to be a continuous layer, but is preferably uniform. After the fat, the palatability enhancer may be applied.

Alternatively, the palatability enhancer can be mixed with the fat and applied concurrently.

Yet alternatively, the palatability enhancer is coated before deposition of fat.

When added, the amount of palatability enhancer is preferably from 0.1 to 10%, more preferably from 0.1 to 7.5%, more preferably from 0.1 to 5%, more preferably from 0.1 to 4%, preferably from 0.5 to 3% by weight of the coated cat kibble.

Kit (not part of the invention)

A kit is disclosed that comprises, in one or more containers in a single package:

a) a cat kibble prepared according to the method of preparation as above described;
b) optionally, a cat kibble coating.

Preferably, said cat kibble coating is a fat and/or a palatability enhancer as above described.
Particular examples according to these disclosures further comprise a means for communicating information or instructions, to help using the kits' elements.

Method for feeding a cat (not part of the invention)

A method for feeding a a cat is disclosed, said method comprising

- feeding said cat with a cat kibble as described above.

Preferably, said cat kibble is a coated cat kibble as above described.

Method for increasing kibble intake (not part of the invention)

A method for increasing kibble intake of a cat is disclosed, said method comprising at least the steps consisting of:

a) providing a cat kibble as above described; and
b) feeding said cat kibble to the cat.

The kibble intake is increased in particular compared to another kibble which is not obtained according to the method of the invention.
As yet mentioned above, it is to be understood that a measurable value expressed with "about" also encompasses the specific value (without any standard deviation).
The present invention will be further described by reference to the following examples, which are presented for the purpose of illustration only and are not intended to limit the scope of the invention.

## EXAMPLES

### 1. MATERIALS AND METHODS

#### 1.1. Preparation of coated cat kibbles

Nutritionally-balanced cat kibbles suitable for consumption by pets were prepared by using an extrusion process comprising the steps of mixing the kibble ingredients, preconditioning, extruding and drying. Unless specifically stated otherwise, the same material (preconditioner and extruder) was used for each assay. The kibble ingredients were fed into a preconditioner before entering an extruder with jackets for cooling or heating. The extruded material was passed through a die and cut into homogenous spherical shape. They were thus dried in a hot air dryer and the resulting diets had less than 8% moisture. They were stored at ambient temperature before being tested. When added, the exogenous fat was incorporated during the extrusion process using dedicated inlets.
These dry kibbles were then coated with animal fat and with 2% of a palatability enhancer comprising a powder mixture of dry pork liver digest, trisodium pyrophosphate and dry yeasts.

#### 1.2. Determination of palatability with a two-bowl test

A "two-bowl test" or "two-pan test" or "versus test" enables one to determine preference of pets for one pet food compared simultaneously to another. A "versus test" is based on the postulate whereby the more food consumed, the more palatable it is.
Tests were performed on panel of 40 cats.

In some tests, palatability of a tested cat kibble was determined by comparison with a commercial super-premium cat kibble control, named "SP control", known as having a high palatability to cats. This SP control was the same in all the Examples. When used, the SP control was provided within the same commercial batch.

Operating method of the test:

- Identical amounts of the two tested kibbles (for example A and B) are weighed out and placed in identical bowls. The amount present in each ration enables the daily requirements of the pets to be met.
- Distribution of the bowls: the bowls are presented at the same time to each cat in an individual loose box.
- Duration of the test: from about 8 minutes to about 24 hours.
- Measured parameters: amount of each food consumed by the end of the test;
- Calculated parameters: individual consumption ratio in % (CR)

$$CRA = \text{consumption of A (g)} \times 100/(\text{consumption of A+B) (g)}$$

$$CRB = \text{consumption of B (g)} \times 100/(\text{consumption of A+B) (g)};$$

⇨ Average consumption ratio (ACR) = average of all individual ratios (an equal importance is given to each animal, regardless of its size and of its corresponding consumption).
If animals have higher or lower consumption compared to predetermined values (which are function of, e.g., the animal weight and/or metabolism), they are not taken into account into statistical treatment.

Statistical analysis

Statistical analysis is used to determine if there is a significant difference between the 2 ratios. A Student's t-test with 3 error thresholds, namely 5%, 1% and 0.1%, is performed.
Significance levels are noted as below:

| | | |
|---|---|---|
| NS | not significant | $(p > 0.05)$ |
| * | significant | $(p \leq 0.05)$ |
| ** | highly significant | $(p \leq 0.01)$ |
| *** | very highly significant | $(p \leq 0.001)$ |

**2. RESULTS**

The different parameters and characteristics of the different Diets are resumed in Table 1.

*Table 1*

| | Total fat (%, based on dry matter) | Exogenous fat (%, based on total weight) | Density after drying (g/L) | DSOR (mm$^2$ / metric ton) | Residence time |
|---|---|---|---|---|---|
| Diet A | 11.4% | 5% | 405 | 430 | 3.9 |
| Diet B | 11.9% | 5% | 445 | 175 | 4.6 |
| Diet C | 9.7% | 1.5% | 410 | 227 | 5.6 |
| Diet D | 10.2% | 2.5% | 480 | 282 | 5.2 |

(continued)

|  | Total fat (%, based on dry matter) | Exogenous fat (%, based on total weight) | Density after drying (g/L) | DSOR (mm$^2$ / metric ton) | Residence time |
|---|---|---|---|---|---|
| Diet E | 15.3% | 5% | 450 | 80 | 2.1 |
| Diet F | 15.8% | 5% | 440 | 228 | 4.4 |
| Diet G | 14.0% | 5% | 485 | 119 | 9.3 |
| Diet H | 9.3% | 0% | 390 | 358 | 3.7 |
| Diet I | 10.9% | 0% | 460 | 477 | 4.0 |
| Diet J | 15.1% | 5% | 460 | 121 | 4.1 |
| Diet K | 13.3% | 2.5% | 400 | 128 | 4.3 |
| Diet L | 15.0 | 5 | 440 | 246 | 4.6 |
| Diet M | 8.7 | 0 | 460 | 609 | 3.9 |
| Diet N | 14.7% | 5% | 465 | 146 | 4.2 |

2.1. EXAMPLE 1 : Illustration of the importance of the value of DSOR on palatability

Nutritionally-balanced cat food Diets in the form of coated cat kibbles were prepared according to the process mentioned in paragraph 1.1.

Cat kibbles (Diets A and B) were formulated in a way to get more than 2% of exogenous fat. The extrusion of Diet B was processed with a DSOR according to the invention. On the contrary, the DSOR of the comparative cat kibble (Diet A) is out of the invention.

Diets A and B comprised the following kibble ingredients: vegetable material (including rice, corn gluten, wheat, corn, fiber source) ; animal material (including meat by-products, brewer's yeast by-product) ; cat premix (vitamins, minerals, amino acids) ; exogenous animal fat.

Diets A and B underwent a similar extrusion process (i.e. precooking and extrusion) with the exception of the DSOR, as described in Table 2 below.

*Table 2*

| Atmospheric preconditioner Extruder twin-screw (L/D = 20) | | | Diet A | Diet B |
|---|---|---|---|---|
| **Fat** | Exogenous fat | % | 5 | 5 |
| | Total fat | % | 11.4 | 11.9 |
| **Preconditioner** | Residence time | min | 3.9 | 4.6 |
| | Ratio Steam: Water | | 57 : 43 | 54 : 46 |
| **Extruder** | Density after extrusion | g /l | 400 | 460 |
| | Product moisture end of extruder | % | 23.0 | 21.1 |
| | Specific mechanical energy | *Wh/kg* | 32.5 | 29.2 |
| | DSOR | *mm$^2$ /h. T$^{-1}$* | 430 | 175 |

(continued)

| Atmospheric preconditioner Extruder twin-screw (L/D = 20) | | | Diet A | Diet B |
|---|---|---|---|---|
| **Dryer** | Density after drying | g /l | 405 | 445 |

Versus tests were performed to compare palatability to cats of the Diets A and B versus the super-premium cat kibble control ("SP control"). The results are presented in Table 3.

*Table 3*

| Test Day | Food A | Food B | Consumption ratio | | Significance |
|---|---|---|---|---|---|
| | | | % A | %B | |
| Day 1 | Diet A | SP control | 22 | 78 | *** |
| Day 2 | Diet A | SP control | 29 | 71 | *** |
| Day 1 | Diet B | SP control | 51 | 49 | NS |
| Day 2 | Diet B | SP control | 47 | 53 | NS |

As shown in Table 3, consumptions were not significantly different between the super-premium control and Diet B, the DSOR of which is inferior to 350 mm$^2$ / metric ton of throughput. On the contrary, the super-premium cat kibble control was very highly significantly more palatable than Diet A, the DSOR of which is superior to 350 mm$^2$ / metric ton of throughput. This demonstrates that kibbles comprising exogenous fat and extruded with a DSOR inferior to 350 mm$^2$ / metric ton of throughput provide an enhanced palatability to cats, whereas kibbles comprising exogenous fat but extruded with a DSOR superior to 350 mm$^2$ / metric ton of throughput do not enhance palatability to cats.

2.2. EXAMPLE 2: Illustration of the importance of the exogenous fat on palatability

Nutritionally-balanced cat food Diets in the form of coated cat kibbles were prepared according to the process mentioned in paragraph 1.1.

*2.2.1. Illustration of the importance of the value of exogenous fat*

Cat kibbles (Diets C and D) were formulated in a way to get exogenous animal fat and were extruded with a DSOR according to the invention. Diet D had more than 2% of exogenous fat. On the contrary, Diet C had less than 2% of exogenous fat.

Diets C and D comprised the following kibble ingredients: vegetable material (including rice, corn gluten, wheat, corn, fiber source, pea proteins concentrate) ; animal material (including meat by-products, brewer's yeast by-product) ; cat premix (vitamins, minerals, amino acids) ; exogenous animal fat.

Diets C and D underwent a similar extrusion process as described in Table 4 below.

*Table 4*

| Atmospheric preconditioner Extruder twin screw (L/D = 20) | | | Diet C | Diet D |
|---|---|---|---|---|
| **Fat** | Exogenous fat | % | 1.5 | 2.5 |
| | Total fat | % | 9.7 | 10.2 |
| **Preconditioner** | Residence time | min | 5.6 | 5.2 |
| **Extruder** | Density after extrusion | g/l | 410 | 480 |
| | Product moisture end of extruder | % | 24.2 | 19.9 |
| | Specific mechanical energy | *Wh/kg* | 34.7 | 38.8 |
| | DSOR | *mm$^2$/h. T$^{-1}$* | 227 | 282 |

(continued)

| Atmospheric preconditioner Extruder twin screw (L/D = 20) | | | Diet C | Diet D |
|---|---|---|---|---|
| **Dryer** | Density after drying | g/l | 410 | 480 |

Versus tests were performed to compare palatability to cats of the Diets C and D versus the super-premium cat kibble control ("SP control"), known as having a high palatability to cats. The results are presented in Table 5.

*Table 5*

| Test Day | Food A | Food B | Consumption ratio | | Significance |
|---|---|---|---|---|---|
| | | | % A | %B | |
| Day 1 | Diet C | SP control | 32 | 68 | *** |
| Day 2 | Diet C | SP control | 27 | 73 | *** |
| Day 1 | Diet D | SP control | 49 | 51 | NS |
| Day 2 | Diet D | SP control | 43 | 57 | NS |

As shown in Table 5, consumptions were not significantly different between the super-premium control and Diet D. On the contrary, the super-premium cat kibble control was very highly significantly more palatable than Diet C, which had less than 2% of exogenous fat. This demonstrates that kibbles having more than 2% of exogenous fat (and extruded with a DSOR according to the invention) provide an enhanced palatability to cats, compared to kibbles having less than 2% of exogenous fat (even if extruded with a DSOR according to the invention).

*2.2.2. Illustration of the effect of the amount of exogenous fat*

Cat kibbles (Diets J and K) were formulated in a way to get more than 2% of exogenous fat and were extruded with a DSOR according to the invention. Diet J had more exogenous fat than Diet K. On the contrary, comparative Diet I did not contain exogenous fat and the DSOR during the extrusion of this cat kibble was out of the invention.

Diets I, J, K comprised the following kibble ingredients: vegetable material (including rice, corn gluten, wheat, corn, fiber source, pea proteins concentrate) ; animal material (including fresh meat, poultry meal by-products, whole dried eggs, brewer's yeast by-product) ; cat premix (vitamins, minerals, amino acids). Diets J and K also contained exogenous animal fat.

Diets I, J and K underwent a similar extrusion process as described in Table 6 below.

*Table 6*

| Atmospheric preconditioner Extruder twin screw (L/D = 20) | | | Diet I | Diet J | Diet K |
|---|---|---|---|---|---|
| **Fat** | Exogenous fat | % | 0 | 5 | 2.5 |
| | Total fat | % | 10.9 | 15.1 | 13.3 |
| **Preconditioner** | Residence time | min | 4.0 | 4.1 | 4.3 |
| | Ratio Steam : Water | | 100 : 0 | 100 : 0 | 100 : 0 |
| **Extruder** | Density after extrusion | g/l | 460 | 510 | 460 |
| | Product moisture end of extruder | % | 28.3 | 23.1 | 22.7 |
| | Specific mechanical energy | *Wh/kg* | 28.3 | 28.2 | 38.9 |
| | DSOR | $mm^2/h.T^{-1}$ | 477 | 121 | 128 |
| **Dryer** | Density after drying | g/l | 460 | 460 | 400 |

Versus tests were first performed to compare palatability to cats of the Diets I/J/K versus the super-premium cat kibble control ("SP control"), known as having a high palatability to cats. Versus tests were then performed to compare palatability to cats of the Diets J and K. The results are presented in Table 7.

*Table 7*

| Food A | Food B | Consumption ratio | | Significance |
| --- | --- | --- | --- | --- |
| | | % A | %B | |
| Diet I | SP control | *33* | *67* | *** |
| Diet J | SP control | *46* | *54* | NS |
| Diet K | SP control | *47* | *53* | NS |
| Diet J | Diet K | *69* | *31* | *** |

As shown in Table 7, consumptions were not significantly different between the super-premium control and Diet J or K. On the contrary, the super-premium cat kibble control was very highly significantly more palatable than Diet I. This demonstrates, again, that kibbles having more than 2% of exogenous fat, which are extruded with a DSOR according to the invention, provide an enhanced palatability to cats.

Then, as shown in Table 7, consumptions were very highly significantly different between Diet J and Diet K, showing a preference for Diet J. This demonstrates that a kibble having 5% of exogenous fat (while DSOR is according to the invention) is more palatable than a kibble having 2.5% of exogenous fat (while DSOR is according to the invention).

2.3. EXAMPLE 3 : Illustration of the effect of the residence time on palatability

Nutritionally-balanced cat food Diets in the form of coated cat kibbles were prepared according to the process mentioned in paragraph 1.1.

Cat kibbles (Diets E, F and G) were formulated in a way to get more than 2% of exogenous fat and were extruded with a DSOR according to the invention. Diets E, F and G differ in their residence time into the preconditioner.

It was not possible to produce kibbles according to the invention, in particular with a standard density, with a time of residence in the preconditioner inferior to 2 minutes.

Diets E, F, G comprised the following kibble ingredients: vegetable material (including rice, corn gluten, wheat, corn, fiber source, pea proteins concentrate) ; animal material (including fresh meat, poultry meal by-products, whole dried eggs, brewer's yeast by-product) ; cat premix (vitamins, minerals, amino acids); exogenous animal fat.

The extrusion process was different for the three Diets in order to determine the impact of the other experimental parameters, in particular the impact of various times of residence into the preconditioner, and of the equipment, in particular the type of extruder (mono screw for Diet E and twin screw for Diets F and G).

*Table 8*

| Atmospheric preconditioner | | | Diet E | Diet F | Diet G |
| --- | --- | --- | --- | --- | --- |
| Fat | Exogenous fat | % | 5 | 5 | 5 |
| | Total fat | % | 15.3 | 15.8 | 14.0 |
| Preconditioner | Residence time | min | 2.1 | 4.4 | 9.3 |
| | Ratio Steam : Water | | 100 : 0 | 100 : 0 | 100 : 0 |
| Extruder | Density after extrusion | g /l | 520 | 520 | 485 |
| | Product moisture end of extruder | % | 22.8 | 25.0 | 23.9 |
| | Specific mechanical energy | *Wh/kg* | 28.8 | 28.1 | 39.2 |
| | DSOR | $mm^2 / h.\ T^{-1}$ | 80 | 228 | 119 |
| Dryer | Density after drying | g/l | 450 | 440 | 485 |

Versus tests were performed to compare palatability to cats of the Diets E, F and G. The results are presented in Table 9.

*Table 9*

| Food A | Food B | Consumption ratio | | Significance |
|---|---|---|---|---|
| | | % A | % B | |
| Diet E | Diet F | *54* | *46* | NS |
| Diet G | Diet F | *57* | *43* | NS |
| Diet E | Diet G | *54* | *46* | NS |

As shown in Table 9, consumptions were not significantly different between Diet E and Diet F, between Diet F and Diet G, and between Diet E and Diet G. This demonstrates that kibbles according to the invention are palatable to cats, whatever the time of residence in the preconditioner (longer than 2 minutes) and the type of extruder.

2.4. UNDERLINE: EXAMPLE 4 : Illustration of the importance of the exogenous fat and the DSOR on palatability

Nutritionally-balanced cat food Diets in the form of coated cat kibbles were prepared according to the process mentioned in paragraph 1.1.
Cat kibbles according to the invention (Diets B, D, J and K) were formulated in a way to get more than 2% of exogenous fat and were extruded with a DSOR according to the invention (see Examples 1 and 2). On the contrary, comparative cat kibbles (Diets H and I) did not contain exogenous fat and the DSOR during the extrusion of these cat kibbles was out of the invention.
Diet H comprised the following kibble ingredients: vegetable material (including rice, corn gluten, wheat, corn, fiber source) ; animal material (including poultry meal by-products, brewer's yeast by-product) ; cat premix (vitamins, minerals, amino acids).
Diets B, D, H, I, J and K underwent a similar extrusion process with the exception of the DSOR, as described in Tables 2, 4, 6 and in Table 10 below.

*Table 10*

| Atmospheric preconditioner Extruder twin-screw (L/D = 20) | | | Diet H |
|---|---|---|---|
| **Fat** | Exogenous fat | % | 0 |
| | Total fat | % | 9.3 |
| **Preconditioner** | Residence time | min | 3.7 |
| **Extruder** | Density after extrusion | g /l | 400 |
| | Product moisture end of extruder | % | 22.8 |
| | Specific mechanical energy | *Wh/kg* | 36.5 |
| | DSOR | $mm^2/h.T^{-1}$ | 358 |
| **Dryer** | Density after drying | g / l | 390 |

Versus tests were performed to compare palatability to cats of Diets B, D with Diet H, and to compare palatability to cats of Diets J, K with Diet I. The results are presented in Table 11.

*Table 11*

| Food A | Food B | Consumption ratio | | Significance |
|---|---|---|---|---|
| | | % A | %B | |
| Diet H | Diet B | *35* | *65* | *** |
| Diet H | Diet D | *34* | *66* | *** |
| Diet I | Diet J | *24* | *76* | *** |
| Diet I | Diet K | *27* | *73* | *** |

As shown in Table 11, consumptions were very highly significantly different between Diet B/D and Diet H, and between Diet J/K and Diet I, showing a preference for Diets B, D and J, K, respectively. This demonstrates that the addition of more than 2% of exogenous animal fat, while performing an extrusion with a DSOR inferior to 350 $mm^2$ / metric ton of throughput provide an enhanced palatability to cats.

2.5. EXAMPLE 5 : Effect of the nature of the exogenous fat

Nutritionally-balanced cat food Diets in the form of coated cat kibbles were prepared according to the process mentioned in paragraph 1.1.

Cat kibbles according to the invention (Diet F and N) were formulated in a way to get more than 2% of exogenous fat and were extruded with a DSOR according to the invention. These kibbles were prepared with different exogenous animal fats.

Diets F and N comprised the following kibble ingredients: vegetable material (rice, corn gluten, wheat, corn, fiber source, pea proteins concentrate) ; animal material (fresh meat, poultry meal by-products, whole dried eggs, brewer's yeast by-product) ; cat premix (vitamins, minerals, amino acids). Diet F comprised exogenous pork fat while Diet N comprised beef tallow.

Diets F and N underwent a similar extrusion process with the exception of the DSOR, as described in Tables 8 and 12 below.

*Table 12*

| Atmospheric preconditioner Extruder twin-screw (L/D = 20) | | | Diet N |
|---|---|---|---|
| **Fat** | Exogenous fat | % | 5 |
| | Total fat | % | 14.7 |
| | Residence time | min | 4.2 |
| | Ratio Steam : Water | | 100 : 0 |
| **Extruder** | Density after extrusion | g /l | 465 |
| | Product moisture end of extruder | % | 22.6 |
| | Specific mechanical energy | *Wh/kg* | 39.3 |
| | DSOR | $mm2 / h.T^{-1}$ | 146 |
| **Dryer** | Density after drying | g /l | 460 |

Versus tests were performed to compare palatability to cats of Diet F and Diet N. The results are presented in Table 13.

*Table 13*

| Food A | Food B | Consumption ratio | | Significance |
|---|---|---|---|---|
| | | % A | %B | |
| Diet F | Diet N | *49* | *51* | NS |
| Diet F | Diet N | *57* | *43* | NS |

As shown in Table 13, consumptions were not significantly different between Diet F and Diet N. This demonstrates that kibbles according to the invention are palatable to cats, whatever the exogenous animal fat.

2.6. EXAMPLE 6 : Effect on palatability to dogs

Nutritionally-balanced petfood Diets in the form of coated kibbles were prepared as described in paragraph 1.1.

Kibble according to the invention (Diet L) was formulated in a way to get more than 2% of exogenous fat and were extruded with a DSOR according to the invention. On the contrary, comparative kibble (Diet M) did not contain exogenous fat and the DSOR during the extrusion of this kibble was out of the invention.

Diets L and M comprised the following kibble ingredients: vegetable material (rice, corn gluten, wheat, corn, fiber source, pea proteins concentrate) ; animal material (fresh meat, poultry meal by-products, whole dried eggs, brewer's yeast by-product) ; premix (vitamins, minerals, amino acids). Diet L comprised exogenous animal fat while Diet M did not.

Diets L and M underwent a similar extrusion process with the exception of the DSOR, as described in Table 14 below.

*Table 14*

| Atmospheric preconditioner Extruder twin-screw (L/D = 20) | | | Diet L | Diet M |
|---|---|---|---|---|
| **Fat** | Exogenous fat | % | 5 | 0 |
| | Total fat | % | 15.0 | 9.0 |
| | Residence time | min | 4.6 | 3.9 |
| | Ratio Steam: Water | | 100 : 0 | 100 : 0 |
| **Extruder** | Density after extrusion | g / l | 515 | 470 |
| | Product moisture end of extruder | % | 26.4 | 24.3 |
| | Specific mechanical energy | *Wh / kg* | 29.6 | 26.9 |
| | DSOR | $mm2 / h.T^{-1}$ | 246 | 609 |
| **Dryer** | Density after drying | g / l | 440 | 460 |

Versus tests were performed to compare palatability to dogs of Diet L and Diet M. The results are presented in Table 15.

*Table 15*

| Food A | Food B | Consumption ratio | | Significance |
|---|---|---|---|---|
| | | % A | %B | |
| Diet L | Diet M | *52* | *48* | NS |

As shown in Table 14, consumptions were not significantly different between Diet L and Diet M. This demonstrates that processing kibble ingredients comprising exogenous fat with a DSOR inferior to 50 $mm^2$ / metric ton of throughput do not enhance palatability to dogs. The present invention is thus specifically dedicated to cats.

**Claims**

**1.** A method for producing a cat kibble having a density from 350 to 550 g/L, comprising at least the steps of:

a) providing kibble ingredients,
wherein one of said kibble ingredients is exogenous fat, said exogenous fat being an extrinsic or external fat which is provided as such as an individual cat kibble ingredient,
and wherein said kibble ingredients comprise at least 2% of said exogenous fat (% based on total weight of kibble ingredients),
b) at least partially precooking said kibble ingredients in a preconditioner, wherein said ingredients have a residence time in said preconditioner of at least 2 minutes;
c) extruding the at least partially precooked kibble ingredients in an extruder with a die surface outflow rate (DSOR) inferior to 350 $mm^2$ / metric ton of throughput,
wherein said DSOR refers to the total opened sections of the die holes at the outlet of the extruder divided by the working flow rate of the product at the outlet of the extruder die, defined by Equation (1):

$$(1) \quad DSOR = \text{Total open area / Extruder rate}$$

d) drying the kibble extrudate resulting from step c),
thereby obtaining a kibble palatable to cats.

**2.** The method according to claim 1, wherein said exogenous fat is an animal fat, preferably selected from the group consisting of poultry fat, chicken fat, pork fat, dairy fat, lamb tallow, beef tallow, marine oils, and combinations thereof.

**3.** The method according to claim 1 or 2, wherein said cat kibble has at least 9%, more preferably at least 9% of total fat by weight (% weight based on dry matter).

**4.** The method according to any one of claims 1 to 3, wherein said kibble ingredients further comprise at least one animal material and one vegetable material.

**5.** The method according to any one of claims 1 to 4, wherein said kibble ingredients comprise strictly less than 50% of starch (% weight based on dry matter).

**6.** The method according to any one of claims 1 to 5, wherein steam and water are injected in said preconditioner in step b) at a steam:water ratio R1 from 30:70 to 100:0.

**Patentansprüche**

**1.** Verfahren zur Herstellung von Katzenkroketten mit einer Dichte von 350 bis 550 g/l, das zumindest die folgenden Schritte umfasst:

a) Bereitstellen von Kroketten-Zutaten,
wobei eine der Kroketten-Zutaten exogenes Fett ist, wobei das exogene Fett ein extrinsisches oder äußeres Fett ist, das als solches als individuelle Katzenkroketten-Zutat bereitgestellt wird,
und wobei die Kroketten-Zutaten zumindest 2% des exogenen Fetts (% bezogen auf das Gesamtgewicht der Kroketten-Zutaten) umfassen,
b) zumindest teilweises Vorkochen der Kroketten-Zutaten in einem Vorkonditionierer, wobei die Zutaten eine Verweilzeit im Vorkonditionierer von zumindest 2 Minuten haben;
c) Extrudieren der zumindest teilweise vorgekochten Kroketten-Zutaten in einem Extruder mit einer Ausflussrate der Düsenoberfläche (DSOR) die geringer als 350 mm2 / metrische Tonne Durchsatz ist,
wobei sich die DSOR auf die insgesamt geöffneten Abschnitte der Düsenlöcher am Auslass des Extruders, geteilt durch die Arbeitsflussrate des Produkts am Auslass der Extruderdüse bezieht und mit der Gleichung (1) definiert ist:

$$(1)\ DSOR = Gesamte\ offene\ Fläche\ /\ Extruderrate$$

d) Trocknen des aus Schritt c) hervorgehenden Krokettenextrudats,
wodurch die für Katzen schmackhaften Futterkroketten erzielt werden.

**2.** Verfahren nach Anspruch 1, wobei das exogene Fett ein tierisches Fett ist, das vorzugsweise aus der Gruppe bestehend aus Geflügelfett, Hühnerfett, Schweinefett, Molkereifett, Lamm-Talg, Rindertalg, Meeresölen und Kombinationen davon ausgewählt wird.

**3.** Verfahren nach Anspruch 1 oder 2, wobei die Katzenkroketten zumindest 9 Gew.-%, bevorzugter zumindest 9 Gew.-% des Gesamtfetts haben (Gew.-% auf der Grundlage der Trockenmasse).

**4.** Verfahren nach einem der Ansprüche 1 bis 3, wobei die Kroketten-Zutaten ferner zumindest einen tierischen und einen pflanzlichen Stoff beinhalten.

**5.** Verfahren nach einem der Ansprüche 1 bis 4, wobei die Kroketten-Zutaten streng weniger als 50 Gew.-% Stärke (Gew.-% auf der Grundlage der Trockenmasse) umfassen.

**6.** Verfahren nach einem der Ansprüche 1 bis 5, wobei dem Vorkonditionierer bei Schritt b) Dampf und Wasser in einem Dampf:Wasser-Verhältnis R1 von 30:70 bis 100:0 eingespritzt werden.

**Revendications**

1. Procédé pour produire une croquette pour chats ayant une masse volumique de 350 à 550 g/l, comprenant au moins les étapes suivantes :

   a) fourniture d'ingrédients de croquette,
   dans laquelle l'un desdits ingrédients de croquette est une graisse exogène, ladite graisse exogène étant une graisse extrinsèque ou externe qui est fournie telle quelle sous la forme d'un ingrédient individuel de croquette pour chats,
   et dans laquelle lesdits ingrédients de croquette comprennent au moins 2 % de ladite graisse exogène (le pourcentage étant basé sur le poids total des ingrédients de croquette),
   b) précuisson au moins partielle desdits ingrédients de croquette dans un préconditionneur, dans laquelle lesdits ingrédients ont un temps de séjour dans ledit préconditionneur d'au moins 2 minutes ;
   c) extrusion des ingrédients de croquette au moins partiellement précuits dans une extrudeuse ayant un débit de sortie de surface de filière (DSOR) inférieur à 350 mm$^2$/tonne métrique de production,
   dans lequel ledit DSOR se réfère au total des sections ouvertes des trous de filière à la sortie de l'extrudeuse divisé par le rendement de production du produit à la sortie de la filière de l'extrudeuse, défini par l'équation (1) :

$$(1) \ DSOR = \text{surface totale ouverte / débit de l'extrudeuse,}$$

   d) séchage de l'extrudat de croquette résultant de l'étape c),
   ce qui donne ainsi une croquette appétente pour les chats.

2. Procédé selon la revendication 1, dans lequel ladite graisse exogène est une graisse animale, de préférence choisie dans le groupe constitué par la graisse de volaille, la graisse de poulet, la graisse de porc, la graisse laitière, le suif d'agneau, le suif de bœuf, les huiles d'origine marine, et leurs combinaisons.

3. Procédé selon la revendication 1 ou 2, dans lequel ladite croquette pour chats a au moins 9 %, de préférence au moins 9 % en poids de graisses totales (pourcentage en poids basé sur la matière sèche).

4. Procédé selon l'une quelconque des revendications 1 à 3, dans lequel lesdits ingrédients de croquette comprennent en outre au moins une matière d'origine animale et une matière d'origine végétale.

5. Procédé selon l'une quelconque des revendications 1 à 4, dans lequel lesdits ingrédients de croquette comprennent strictement moins de 50 % d'amidon (pourcentage en poids basé sur la matière sèche).

6. Procédé selon l'une quelconque des revendications 1 à 5, dans lequel de la vapeur et de l'eau sont injectées dans ledit préconditionneur dans l'étape b) en un rapport vapeur/eau R1 de 30/70 à 100/0.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007041581 A1
- WO 2016002301 A1
- JP 5733709 B
- WO 2009095417 A1

### Non-patent literature cited in the description

- **LIN et al.** *Effects of lipids and processing conditions on degree of starch gelatinization of extruded dry pet food*
- **BRADSHAW.** The evolutionary basis for the feeding behaviour of domestic dogs (Canis familiaris) and Cats (Felis catus). *J. Nutr.,* 2006, vol. 136, 1927S-1931S
- *Domestic dogs and cats, although both carnivores, therefore originated in different branches of the Carnivora, and have inherited rather different legacies of food preferences and food selection behavior,* 1927S